# EUROPEAN PATENT SPECIFICATION

(11) **EP 1 278 425 B1**
(45) Date of publication and mention of the grant of the patent: **21.06.2006**
(21) Application number: 01916947.3
(22) Date of filing: 04.04.2001
(51) Int. Cl.: A22C 21/06

(54) **METHOD AND SYSTEM FOR INSPECTION OF SLAUGHTERED POULTRY, IN PARTICULAR BROILERS**
VERFAHREN UND VORRICHTUNG ZUR INSPEKTION VON SCHLACHTGEFLÜGEL, INSBESONDERE BRATHÜHNEN
PROCEDE ET SYSTEME D'INSPECTION DE VOLAILLES ABATTUES, EN PARTICULIER DE POULETS A ROTIR

(30) Priority: 11.04.2000 DK 200000606
(43) Date of publication of application: 29.01.2003
(73) Proprietor: Linco Food Systems A/S, 8380 Trige (DK)
(72) Inventor: LINDHOLST, Svend, DK-8520 Lystrup (DK)
(74) Representative: Gregersen, Niels Henrik
(86) International application number: PCT/DK2001/000224
(87) International publication number: WO 2001/076378

(56) References cited:
- EP-A1- 0 530 868
- WO-A1-99/03354
- US-A- 5 549 521
- US-A- 5 980 377

## Description

The present invention concerns a method for inspection of slaughtered poultry, particularly broilers, and of the kind indicated in the preamble of claim 1.

EP-B1-0 530 868 discloses an apparatus for processing poultry and comprising an overhead conveyor for conveying birds suspended by the legs, a processing station disposed along a section of the overhead conveyor and having processing means for removing the viscera from the abdominal cavity as the birds are conveyed by means of the overhead conveyor, a control station allowing visual inspection of the viscera and the associated birds, and a further conveyor driven synchronously with the overhead conveyor and disposed mainly in parallel with and at a predetermined distance from a part of the overhead conveyor, where the processing means is arranged for complete detaching of the viscera from the birds, and where the further conveyor is disposed after the processing station for receiving and conveying the removed viscera past the control station simultaneously with the associated bird being carried by the overhead conveyor. The further conveyor is an endless conveyor, such as a chain conveyor carrying transport means which receives the intestine lumps and comprises gripping means that may be moved between an open and a closed position.

The invention has the purpose of indicating an improved method for inspecting slaughtered poultry, particularly broilers, and where the possibility of cross-contamination may be avoided completely or be reduced substantially.

The method according to the invention is characterised in that said first conveyor before or after the processing station is moving past a control station for inspection of the carcasses, that selection of a certain carcass for rejection or closer inspection automatically results in taking down this and the associated viscera pack, that the second conveyor moves past a control station after the processing station for inspection of the viscera packs, that selection of a certain viscera pack for rejection or closer inspection automatically results in taking down this and the associated carcass, and that carcasses that have been taken down and associated viscera packs that have been taken down are placed juxtaposed on a special inspection conveyor belt. Hereby is achieved the possibility of cross-contamination may be avoided completely or reduces by simple means.

The invention implies a substantial improvement as compared with prior art methods where there greatest risk of cross-contamination was at the secondary slaughtering line at which cutting up and evisceration etc. occurs as the bacteria primarily are located in the intestine pack. After evisceration of viscera packs, the carcass was suspended in the legs, i.e. viscera in the form of organs and intestines were previously allowed to hang down along the outer side of the broiler, inter alia for veterinary inspection. It is obvious that exactly this well-known evisceration method constituted an evident possibility of cross-contamination during the slaughtering process as the single broilers might touch each other further.

The method according to the invention is suitably performed in such a way that the said inspection of the carcasses and the viscera packs, respectively, occurs by manual, visual inspection, preferably without touching the carcasses and the viscera packs, respectively.

Alternatively, the method according to the invention may be performed in such a way that said inspection of the carcasses and the viscera packs occurs by means of a system with electronic pattern recognition.

The invention also concerns a plant for inspection of slaughtered poultry, particularly broilers, according to the method and comprising a processing station with a number of evisceration means, a first conveyor in which poultry carcasses are suspended by the legs, a second conveyor to which the viscera packs are transferred and from which they are suspended, and a number of control stations by which the conveyors are moving, the plant being characterised in that, in connection with the control stations, the conveyors comprise means arranged to take down selected carcasses and associated viscera packs automatically and to place carcasses and associated viscera packs juxtaposed on a special inspection conveyor belt.

The invention will be described in the following in connection with the drawing, on which:
- Fig. 1: shows a overview of an embodiment of a plant according to the invention,
- Fig. 2: shows an overview of a part of an alternative embodiment of a plant according to the invention, and
- Fig. 3: shows a side view of a control station of the plant in Fig. 2.

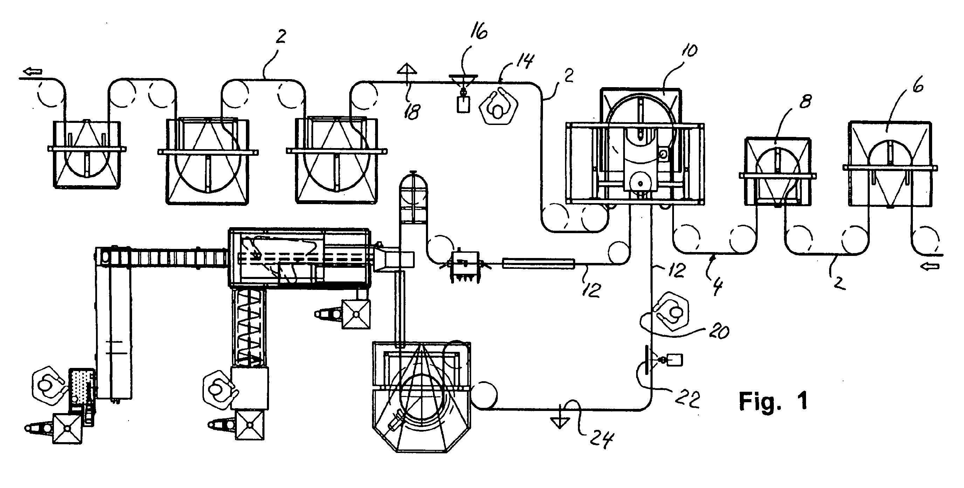

To the right in Fig. 1, the broilers arrive while suspended by the legs in a first conveyor 2 for an evisceration line 4 where the broilers passes a so-called vent cutter 6, i.e. an apparatus where the anus is cut out by means of a rotating round knife, after which the broilers pass an apparatus 8 performing an opening cut so that access is made to the body cavity before the broilers pass a processing station in the shape of an evisceration apparatus 10 of the type ACE with a number of evisceration members arranged to eviscerate complete viscera packs from the broilers and to transfer the viscera packs to a second conveyor 12 while the broilers remain suspended by the legs in the first conveyor 2.

After the ACE evisceration apparatus 10, the broilers in the first conveyor 2 pass by a control station 14 where manual veterinary inspection of the broilers is performed, and where alternatively, or concurrently, inspection of the broilers by means of a pattern recognition system may be performed at 16. Immediately after the control station 14, the broilers pass a release station 18 where selected broilers may be taken down from the conveyor 2 for discarding or for subsequent control.

After the ACE evisceration apparatus 10, the viscera packs in the second conveyor 12 pass by a control station 20 where manual veterinary inspection of the viscera packs is performed, and where alternatively, or concurrently, video inspection of the viscera packs may be performed at 22. Immediately after the control station 20, the viscera packs pass a release station 24 where selected viscera packs may be taken down from the conveyor 12 for discarding or subsequent control.

The control stations 14 and 20 and the release stations 18 and 24 work in a coordinated way as taking down of a selected broiler in the release station 18 may result in automatic taking down of the associated viscera pack in the release station 24. In the same way, taking down of a certain viscera pack in release station 24 may result in automatic taking down of the associated broiler in the release station 18.

In case that taking down of selected broilers and selected viscera packs is motivated by subsequent control, bringing together of associated broilers and viscera packs occurs in a way not described in detail and where the broilers and the packs are juxtaposed on a special inspection belt which, for example, is divided into separate belt sections or trays. After the release stations 18 and 24, the conveyors 2 and 12 pass diverse further processing stations for the broilers and the viscera packs, respectively.

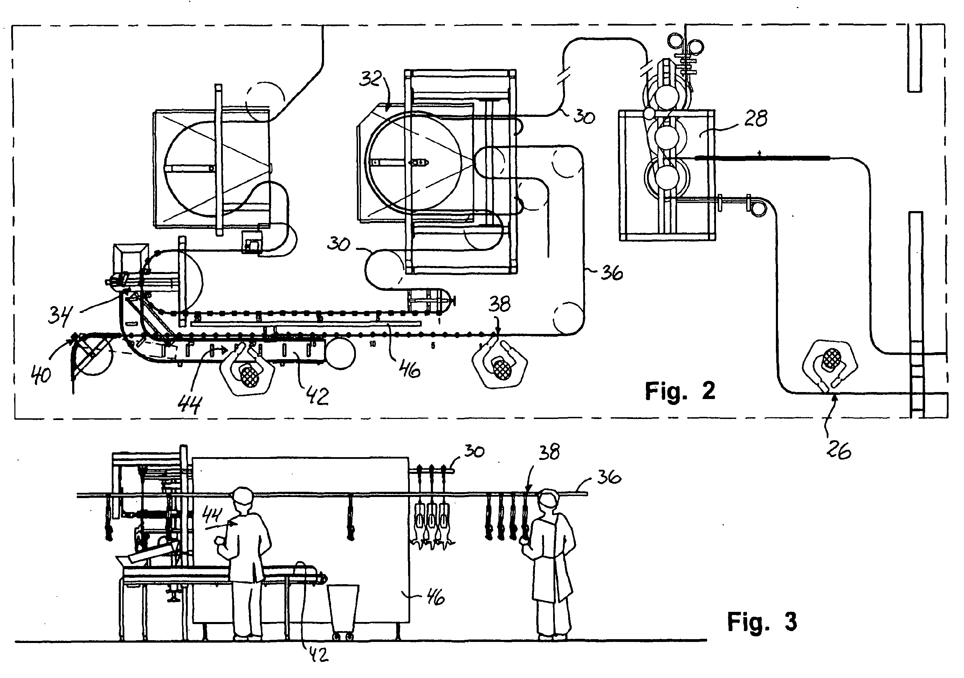

Figs. 2 and 3 show a part on a plant where an alternative veterinary inspection is applied as the external inspection of the broilers has already been performed at the picking line at 26, i.e. before feet and head is cut off in a subsequent apparatus 28 where simultaneously transfer of the broilers occurs to a primary conveyor 30 of the evisceration line. Between the apparatus 28 and the shown ACE evisceration apparatus 32 there may, as indicated, be inserted other processing stations, e.g. a vent cutter and an apparatus for cutting up, cf. Fig. 1.

After the ACE evisceration apparatus 32, the broilers continue suspended by their legs in the primary conveyor 30 toward a release position 34 where automatic taking down of broilers is performed, either determined by the first external inspection or determined by inspection of the viscera packs which immediately after evisceration in the ACE evisceration apparatus 32 are transferred to and suspended from a secondary conveyor 36 and which subsequently pass a veterinary inspector at 38.

The veterinary inspector at 38 may either directly release or take down a viscera pack from the secondary conveyor 36 for discarding by pulling the release pin of the bracket, or the inspector may just turn a marker on the bracket. By turning this marker to a certain position, a sensor detects that this viscera pack is for discarding and has to be taken down. The signal of the sensor is transmitted to a subsequent release mechanism at 40 and simultaneously to the sequential broiler downtaker serving that the associated broiler is also taken down for discarding or subsequent control at 34.

The point of release for both viscera pack and associated broiler are chronologically performed in such a way that both parts are placed beside each other on a conveyor 42 divided into compartments and moving to veterinary inspection at 44.

Opposite to the veterinary inspector at 44, there is provided a screen 46 between the conveyors 30 and 36 so that any possibility of cross-contamination due to droplets exchanged between broilers and viscera packs is effectively avoided.

As the brackets of the conveyors 30 and 36, respectively, are furthermore provided with colour codes, there will be possibility at 38 for the veterinary inspector to identify a broiler with a certain viscera pack, even though viscera pack and associated broiler are substantially mutually displaced on the conveyors 30 and 36, i.e. the inspector may either pass the broiler or let it continue to subsequent taking down and discarding at 40 and 44, respectively.

The advantage of this alternative system is an improved veterinary inspection as the inspector 38 at the secondary conveyor 36 does not have to use time for taking down a broiler associated with discardable viscera pack from the primary conveyor 30 as the inspector, only by turning said marker on the viscera pack to be discarded, ensures that the associated broiler is subsequently taken down for further inspection.

This method ensures that the veterinary inspector has more time for concentrating on control of all broilers, continuously ensuring that all selected broilers are taken down from the conveyor belt, also when things have come to a head. Another great advantage is a substantially improved hygiene as both inspectors do not necessarily have to touch the broilers or the viscera packs whereby the possibility of cross-contamination is considerably reduced. If it is necessary for the inspectors to touch a broiler or viscera pack, there will also be time for cleaning the hands between the touches.

## Claims

1. A method for inspecting slaughtered poultry, particularly broilers, where poultry carcasses suspended by the legs are moved to a processing station by a first conveyor, where viscera packs are eviscerated and are transferred to and suspended from a second conveyor while the carcasses remain suspended in the first conveyor, **characterised in that** said first conveyor before or after the processing station is moving past a control station for inspection of the carcasses, that selection of a certain carcass for rejection or closer inspection automatically results in taking down this and the associated viscera pack, that the second conveyor moves past a control station after the processing station for inspection of the viscera packs, that selection of a certain viscera pack for rejection or closer inspection automatically results in taking down this and the associated carcass, and that carcasses that have been taken down and associated viscera packs that have been taken down are placed juxtaposed on a special inspection conveyor belt.

2. A method according to claim 1, **characterised in that** said inspection of the carcasses and the viscera pack, respectively, occurs by manual, visual inspection, preferably without touching the carcasses and the viscera packs, respectively.

3. A method according to claim 1, **characterised in that** said inspection of the carcasses and the viscera packs, respectively, occurs by means of a system of electronic recognition of patterns.

4. A plant for inspection of slaughtered poultry, particularly broilers, according to the method of claim 1 and comprising a processing station with a number of evisceration means, a first conveyor in which poultry carcasses are suspended by the legs, a second conveyor in which the viscera packs are transferred to and suspended from, and a number of control stations by which the conveyors are moving, **characterised in that**, in connection with the control stations, the conveyors comprise means arranged to take down selected carcasses and associated viscera packs automatically and means arranged to take down selected viscera packs and associated carcasses automatically and to place carcasses and associated viscera packs juxtaposed on a special inspection conveyor belt.

## Patentansprüche

1. Verfahren für die Untersuchung von Schlachtgeflügel, insbesondere von Brathühnern, wobei die Geflügelkarkassen, die an den Beinen aufgehängt sind, durch eine erste Fördereinrichtung in eine Verarbeitungsstation bewegt werden, wo Eingeweidebündel ausgenommen und zu einer zweiten Fördereinrichtung befördert und daran aufgehängt werden, während die Karkassen in der ersten Fördereinrichtung aufgehängt bleiben, **dadurch gekennzeichnet, dass** sich die erste Fördereinrichtung vor oder nach der Verarbeitungsstation an einer Kontrollstation für die Untersuchung der Karkassen vorbeibewegt, dass die Auswahl einer bestimmten Karkasse für eine Zurückweisung oder eine nähere Untersuchung die automatische Abnahme dieser Karkasse und des zugeordneten Eingeweidebündels zur Folge hat, dass sich die zweite Fördereinrichtung nach der Verarbeitungsstation an einer Kontrollstation vorbeibewegt, um die Eingeweidebündel zu untersuchen, dass die Auswahl eines bestimmten Eingeweidebündels für eine Zurückweisung oder eine nähere Untersuchung die automatische Abnahme dieses Bündels und der zugeordneten Karkasse zur Folge hat und dass die Karkassen, die abgenommen worden sind, und die zugeordneten Eingeweidebündel, die abgenommen worden sind, nebeneinander auf einem speziellen Untersuchungsförderband angeordnet werden.

2. Verfahren nach Anspruch 1, **dadurch gekennzeichnet, dass** die Untersuchung der Karkassen bzw. der Eingeweidebündel durch manuelle, visuelle Inspektion, vorzugsweise ohne Berührung der Karkassen bzw. der Eingeweidebündel, erfolgt.

3. Verfahren nach Anspruch 1, **dadurch gekennzeichnet, dass** die Untersuchung der Karkassen bzw. der Eingeweidebündel mittels eines Systems zur elektronischen Erkennung von Mustern erfolgt.

4. Anlage für die Untersuchung von Schlachtgeflügel, insbesondere von Brat hühnern, gemäß dem Verfahren nach Anspruch 1, die eine Verarbeitungssta tion mit zahlreichen Ausnehmemitteln, eine erste Fördereinrichtung, in der die Geflügelkarkassen an den Beinen aufgehängt sind, eine zweite För dereinrichtung, zu der die Eingeweidebündel befördert werden und an der sie aufgehängt werden, und mehrere Kontrollstationen, an denen sich die Fördereinrichtungen vorbeibewegen, umfasst, **dadurch gekennzeichnet, dass** die Fördereinrichtungen in Verbindung mit den Kontrollstationen Mit tel, die so beschaffen sind, dass sie ausgewählte Karkassen und zugeordne te Eingeweidebündel automatisch abnehmen, und Mittel, die so beschaffen sind, dass sie ausgewählte Eingeweidebündel und zugeordnete Karkassen automatisch abnehmen und die Karkassen und die zugeordneten Eingewei debündel nebeneinander auf einem speziellen Untersuchungsförderband anordnen, umfassen.

## Revendications

1. Procédé d'inspection de volailles abattues, en particulier de poulets à rôtir, où les carcasses de volailles suspendues par les pattes sont amenées à un poste de traitement par un premier convoyeur, et où des paquets de viscères sont éviscérés et sont transférés et suspendus à un second convoyeur pendant que les carcasses restent suspendues dans le premier convoyeur, **caractérisé en ce que** ledit premier convoyeur, avant ou après le poste de traitement, est amené à passer devant un poste de contrôle pour l'inspection des carcasses, que la sélection d'une certaine carcasse en vue d'un rejet ou d'une inspection plus poussée se traduit automatiquement par l'enlèvement de celle-ci et du paquet de viscères associé, que le deuxième convoyeur passe devant un poste de contrôle après le poste de traitement pour l'inspection des paquets de viscères, que la sélection d'un certain paquet de viscères en vue du rejet ou d'une inspection plus poussée se traduit automatiquement par le retrait de celui-ci et de la carcasse associée, et que les carcasses qui ont été retirées et les paquets de viscères associés qui ont été retirés sont placés d'une manière juxtaposée sur une courroie de convoyage d'inspection spéciale.

2. Procédé selon la revendication 1, **caractérisé en ce que** ladite inspection des carcasses et des paquets de viscères, respectivement, a lieu par une inspection visuelle manuelle, de préférence sans toucher les carcasses et les paquets de viscères, respectivement.

3. Procédé selon la revendication 1, **caractérisé en ce que** ladite inspection des carcasses et des paquets de viscères, respectivement, a lieu au moyen d'un système de reconnaissance électronique de modèles.

4. Installation pour l'inspection de volailles abattues; en particulier de poulets à rôtir, selon la revendication 1, et comprenant un poste de traitement avec un nombre de moyens d'éviscération, un premier convoyeur dans lequel les carcasses des volailles sont suspendues par les pattes, un deuxième convoyeur dans lequel les paquets de viscères sont transférés à et suspendus, et un nombre de postes de contrôle devant lesquels les convoyeurs passent, **caractérisée en ce que**, en rapport avec les postes de contrôle, les convoyeurs comprennent des moyens agencés pour retirer des carcasses sélectionnées et des paquets de viscères associés automatiquement, et des moyens agencés pour retirer des paquets de viscères sélectionnés et des carcasses associées automatiquement, et pour placer les carcasses et les paquets de viscères associés d'une manière juxtaposée sur une courroie de convoyage d'inspection spéciale.
